(19) Europäisches Patentamt

European Patent Office

Office européen des brevets

(11) EP 1 376 626 A1

(12) **EUROPEAN PATENT APPLICATION**

(43) Date of publication:
02.01.2004 Bulletin 2004/01

(51) Int Cl.⁷: H01G 4/012

(21) Application number: 02405543.6

(22) Date of filing: 28.06.2002

(84) Designated Contracting States:
AT BE CH CY DE DK ES FI FR GB GR IE IT LI LU MC NL PT SE TR
Designated Extension States:
AL LT LV MK RO SI

(71) Applicant: ABB RESEARCH LTD.
8050 Zürich (CH)

(72) Inventors:
• Fuhrmann, Henning
8048 Zürich (CH)
• Carlen, Martin
5443 Niederrohrdorf (CH)
• Jonsson, Johan
77131 Ludvika (SE)

(74) Representative: ABB Patent Attorneys
c/o ABB Schweiz AG,
Intellectual Property (CH-LC/IP),
Brown Boveri Strasse 6
5400 Baden (CH)

(54) **Metallized film capacitor**

(57)  The present invention is concerned with a metallized film capacitor with internal series connections of individual base capacitors which is able to handle discontinuous contacting due to metal spraying. Charging currents entering the contact electrodes at discrete contact spots are redistributed by reinforcements which do form part of the internal base capacitors.

Fig. 4

EP 1 376 626 A1

## Description

FIELD OF THE INVENTION

The invention relates to the field of metallized film capacitors for high voltage applications. It proceeds from a metallized film capacitor with a series connection of internal base capacitors as described in the preamble of patent claim 1.

BACKGROUND OF THE INVENTION

Recent improvements in metallized film capacitor technology allow the latter to be used in high-voltage DC systems. A high-voltage DC capacitor is made by tightly winding two metallized polypropylene (PP) films around each other to form a cylindrical winding. Using small lateral offsets between the two films, the metal layers on the PP films can then be contacted by metal-spraying the lateral side faces of the winding, and the arrangement thus forms a capacitor.

The voltage that can be applied between the electrodes of such a capacitor scales with the breakdown voltage of the PP film which serves as a dielectric for the capacitor. The breakdown voltage depends on the film thickness and on the film quality. In order to achieve higher voltages, the concept of internal series connections was introduced. Instead of using continuously metallized films, some stripes on the PP film extending along the so called winding or machine direction can be left unmetallized such that individual metallized tracks or areas extending in a direction parallel to the winding direction are formed. These metallized tracks then serve as electrodes for internal base capacitors. The latter form a series connection of capacitors between the outermost or contact electrodes which are contacted by zinc-spraying in a known manner. The voltage is then equally split over the series connected internal base capacitors, and the total voltage which can be applied to the capacitor is a multiple of the breakdown voltage of the PP film.

For power capacitors, electrodes of the self-healing type have proven to be beneficial in terms of lifetime, as they are thin enough to locally evaporate around a fault zone. In case of a dielectric breakdown resulting in an internal short circuit, the energy of the electric arc then removes the surrounding metallization, thus isolating the area of the breakdown and enabling the capacitor to remain in service with only a small loss in capacitance. The grading of the electrode thickness as disclosed in US 5,757,607 helps to minimize the Joule losses due to the charging currents flowing in a direction perpendicular to the electrode tracks. In this case, the surface or sheet resistivity of the electrodes decreases from a maximum value at a "free" edge of the electrode to a minimum value at the opposite "contact" edge where the charging currents enter the electrode.

In EP 650 174, a metallized film capacitor includes a continuously metallized intermediate electrode and two contact electrodes of which the thickness of the metallization increases towards the inner "free" edge in order to decrease oxidation effects. The addition of current paths across the conductive tracks as disclosed e. g. in DE 198 56 457 also allows one to tune the surface resistivity of the electrodes. Furthermore, segmentation or patterning of the electrodes and the insertion of bridges with fusing properties between the segments improves the performance and/or the lifetime of the capacitors.

The spacing between a contact area, i.e. the outermost part of a contact electrode applied to a first polymeric film, and an adjacent second film carrying an electrode of the same polarity is created by the small lateral offset of an interposed third film and is only of the order of the thickness of the latter, e.g. 4-17 μm. The metal-spray does not penetrate into these spacings very well, thus leading to contact problems, i.e the contact area is in general not continuously contacted by the zinc-spray. Instead, discrete contact spots occur where charging currents enter the contact electrode. Hence, the charging currents have to flow in a "longitudinal" direction (parallel to the winding direction) to neighbouring areas of the contact spots. Close to the discrete contact spots, the current density is enhanced as compared to the case where currents do flow only in a direction perpendicular to the winding direction (as is the case on the intermediate electrodes). The contribution of this effect to the overall loss factor can be of the same order of magnitude as the dielectric losses ($2 \times 10^{-4}$). Reinforcement of the contact area by substantially increasing its thickness is a known solution to accommodate the longitudinal charging currents.

DESCRIPTION OF THE INVENTION

It is an object of the invention to create a metallized film capacitor of the type mentioned initially, which is able to accommodate longitudinal charging currents due to discontinuous contacting without recurring to overly thick contact areas. These objects are achieved by a metallized film capacitor with series connected internal base capacitors according to patent claim 1.

It has been found that the loss factor which is attributed to discontinuous contacting and related to the unwanted joule heating due to currents flowing in machine direction depends on an effective surface resistivity $\rho_{tot}(c)$ of a contact electrode (c) averaged over a *total* track width of the contact electrode. An electrical reinforcement helping to redistribute the charging currents and/or to lower the effective surface resistivity $\rho_{tot}(c)$ does not need to be confined to a contact area, but instead can be part of a capacitive area of the contact electrode as well. Further, having an appreciable share of a "longitudinal" charging current flow in the capacitive area of the contact electrode calls for a lower effective

surface resistivity $\rho_{cap}(c)$ of the latter as compared to an effective surface resistivity $\rho_{cap}(i)$ of an intermediate electrode (i). As the ordinary "perpendicular" charging currents are lowest at the inner or "free" edge of the contact electrode, the local surface resistivity may in fact be highest there. A more stringent requirement following from the foregoing considerations is that not only the averaged effective surface resistivity $\rho_{cap}(i)$, but even the minimum local surface resistivity $\rho_{min}(i)$ of the intermediate electrode be higher than $\rho_{cap}(c)$.

In a preferred variant of the invention, the contact electrodes are deliberately contacted only at certain, preferably regularly distributed contact spots. One way of doing so is to restrict the contact means to one or several fractions of the lateral side face of the capacitor.

On the other hand, if the position of the contact spots is not known beforehand, it is advantageous not to divide the contact electrodes into segments, and thus not to impede the redistribution of the charging currents involuntarily.

In a preferred embodiment of the invention, the thickness of the metallization is not continuously varied, i.e. the local surface resistivity of the contact electrode takes on only discrete values. This way, each step or stripe of constant thickness is unambiguously attributed a particular function. Thick stripes e.g. may predominantly serve the purpose of distributing charging currents, whereas thin stripes assume a self healing function. As long as a thick stripe which is part of the capacitive area of the contact electrode faces a thin coating on an adjacent intermediate electrode, the overall self healing capabilities of the corresponding internal base capacitance are not impeded.

Further preferred embodiments are evident from the dependent patent claims.

BRIEF DESCRIPTION OF THE DRAWINGS

The subject matter of the invention will be explained in more detail in the following text with reference to preferred exemplary embodiments which are illustrated in the attached schematic drawings, of which

Fig.1, Fig.2   schematically show a cross section through a film capacitor,

Fig.3   shows an enlarged cutout of a cross section,

Fig.4   shows three different metallization profiles, and

Fig.5   shows electrodes with complementary metallization thicknesses.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

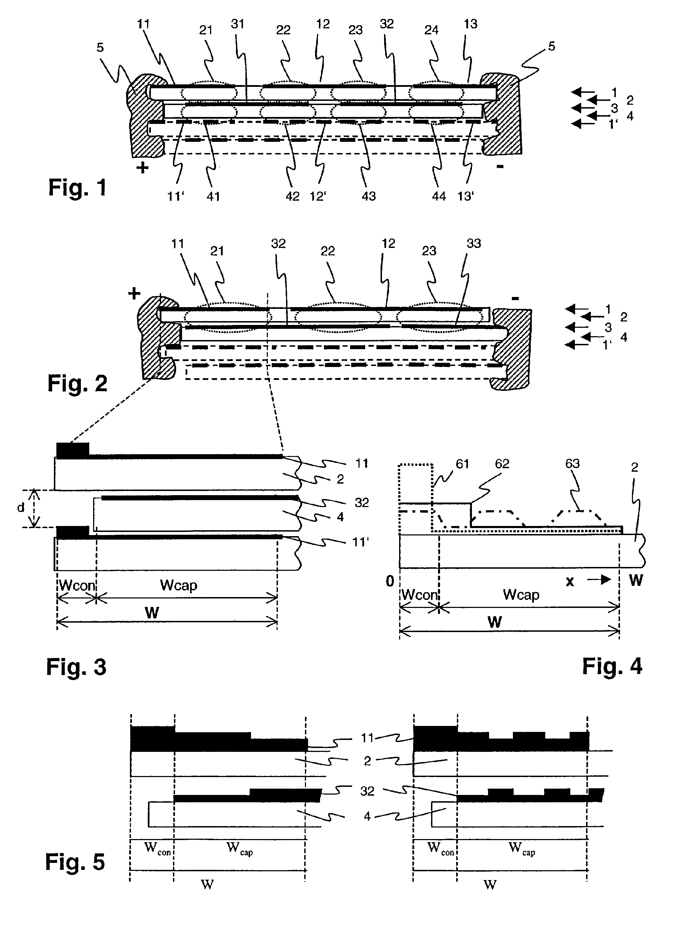

Fig.1 shows a cross section through a film capacitor with four series connected internal base capacitors, all electrodes in reality being in the form of a track or band extending in machine direction perpendicular to the plane of the cross section. A first contact electrode 11, a second intermediate electrode 12 and a second contact electrode 13 build a first conductive multitrack layer in the form of a metallic coating 1 (represented by three thick horizontal lines) applied to a first electrically insulating layer in the form of a dielectric film 2. Next to it is arranged a second metallic coating 3 comprising a first intermediate electrode 31 and a third intermediate electrode 32, which in turn is followed by a second dielectric layer 4. Four series connected internal base capacitors 21, 22, 23, 24 across dielectric film 2 are depicted as dotted ovals. A four-layer base structure 1234 which is made up of the aforementioned layers 1,2,3,4 is repeated once (dashed lines), but upon winding or stacking in a suitable way, can be repeated any number of times. By doing so, internal base capacitors 41,42,43,44 across dielectric film 4 are formed between the electrodes 11',12',13' of the first metallic coating 1' of the adjacent base structure 1234' and the intermediate electrodes 31,32 of the original base structure 1234 and so forth. The contact electrodes 11,13,11',13' laterally protrude and are contacted by an electrically conductive contact means 5 preferably applied by metalspraying.

Fig.2 shows a similar arrangement, but this time comprising three series connected internal base capacitors 21,22,23 formed by the contact electrodes 11 and 33 and the intermediate electrodes 12 and 32. The contact electrodes 11,33 are part of adjacent metallic coatings 1,3. The base structure formed by the layers 1,2,3,4 is repeated once (dashed lines). From the foregoing examples it is evident that any even or odd number of internal base capacitors can be realised.

In Fig.3 is shown an enlarged view of the left-hand edge of one of the previous cross sections. As in all the figures, the relative thickness of the coatings 11,32 and dielectric films 2,4 are not to scale. The contact electrode 11 comprises two adjoining but distinct areas, namely a contact area of width $W_{con}$, which is exposed to the contact agent (not shown in fig.3), and a capacitive area of width $W_{cap}$ which participates in the formation of an internal base capacitor. The contact electrodes 11,13,11',13' laterally protrude and form a suitable offset or vertical spacing s of the order of a film thickness. A reinforcement of the contact area according to the state of the art is depicted as a considerably increased thickness of the coating. Typically, the width $W_{con}$ of the contact area is about 2-5 mm and has a surface resistivity of 1-3 $\Omega/\square$ as compared to more than 5 $\Omega/\square$ for the rest , i.e. the capacitive part of both the contact 1 1and the intermediate 32 electrode.

In the context of the present invention it has been found that the loss factor tan($\delta$) associated with a contact electrode track which is discontinuously contacted can be described by

$$\tan(\delta) \approx \frac{2}{3} \frac{\omega\varepsilon\varepsilon_0\rho_{tot}}{d} L^2 \text{ for } L << \sqrt{\frac{d}{\omega\varepsilon\varepsilon_0\rho_{tot}}}$$

where 2L is the average distance between adjacent contact spots, s and d are the dielectric constant and the thickness of the polymeric film, respectively. $\rho_{tot}$ is the surface resistivity of the contact electrode track, averaged over its *entire* width. Hence the additional losses are proportional to $\rho_{tot}$. When W is the total width of the contact electrode and $\rho(c,x)$ its local surface resistivity ($0 < x < W$), $\rho_{tot}$ is defined by

$$\rho_{tot} = \left( \frac{1}{W} \int_0^W \frac{1}{\rho(c,x)} dx \right)^{-1}$$

From this it follows that the loss factor is not determined solely by the resistivity of the contact area, but by the average surface resistivity $\rho_{tot}$, and that an overly thick reinforcement of the contact area is not the only way to reduce tan($\delta$). This finding represents a considerable advantage, as very thick contact reinforcements are technically limited to about 1 $\Omega/\square$ and usually very expensive.

Fig.4 shows various contact electrode coating profiles in view of the foregoing, applied to a dielectric film 2. The lateral dimensions correspond to those in fig. 3. A first profile 61 represents the reinforcement limited to the contact area as known from fig.3. A second profile 62 is a one step variant according to the invention, in which the reinforcement is not restricted to the contact area, but is also part of the capacitive area. In order to maintain an average surface resistivity or electrode thickness comparable to the one of profile 51, the minimum resistivity is less and the corresponding plateau is broader than in the previous case. Due to the reinforcement in the form of the aforementioned low resistivity plateau extending to the capacitive area, the effective surface resistivity $\rho_{cap}(c)$ *averaged over the capacitive area* of width $W_{cap}$ (thus excluding the contact area), is reduced as compared to the constant high surface resistivity of profile 61. The latter as well as the high resistivity, thin coating sections of the profile 62 in general have self-healing capabilities. A third profile 63 comprises several maxima, the local surface resistivity in no way being limited to monotonically varying functions. Any metallic coating is most conveniently applied by vapour deposition of the metal on a polymeric dielectric film such as polycarbonate, polypropylene or polyester with high dielectric breakdown strength.

In view of the foregoing amendments to the contact electrodes, any intermediate electrode opposing such a contact electrode may be modified as well in order to further improve e.g. the self-healing properties of the capacitor. In particular, those parts of an intermediate electrode facing a contact electrode may have a metallization profile that is different from the preferably flat profile of intermediate electrodes that do not face a contact electrode, as will be detailed in the following.

In Fig.5 are shown two preferred embodiments, in which the contact electrode 11 and the opposing intermediate electrode 32 have complementary metallization thicknesses, such that the resistivity on one electrode is low where it is high on the other one and vice versa. The example on the left hand side is characterized by three different metallization thicknesses in the capacitive area, namely a thick one close to the contact area, reducing the losses by currents in winding direction on the contact electrode, a thin one on the intermediate electrode facing the thick metallization of the contact electrode. A third, medium thickness metallization covers the rest of the capacitive areas of both contact and intermediate electrode, i.e. the area adjacent to the inner or free edge. This method ensures sufficient self-healing in the entire capacitive area. A more complex example of a design following the same principles is shown on the right hand side of Fig.5. In this case, the thick metallization on the contact electrode is not limited to the part of the capacitive area that neighbours the contact area, but is found at several positions along the width.

As a preferred embodiment and in accordance with the invention as detailed above, the following design for the metallic coatings of a metallized film capacitor is proposed:

(a) for the surface resistivity $\rho(c,x)$ of the contact electrode: 1 $\Omega/\square < \rho(c,x) < 30$ $\Omega/\square$ for all x<W; with $\rho_{cap}(c) < 7$ $\Omega/\square$ and $\rho(c,x)$ not being a function of the position in machine direction,

(b) for the surface resistivity $\rho(i,x)$ of the intermediate electrode: 7 $\Omega/\square < \rho(i,x) < 30$ $\Omega/\square$,

where $\rho(i,x)$ can be a function of the position in machine direction, i.e. the intermediate electrode can be segmented.

LIST OF REFERENCE SYMBOLS

| | |
|---|---|
| 1 | First metallic coating |
| 11,13 | Contact electrodes |
| 131 | Contact stripes |
| 12 | Intermediate electrode |
| 2 | First dielectric film |
| 21,22,23,24 | Internal base capacitors |
| 3 | Second metallic coating |

| 31,32 | Intermediate electrodes |
| 33 | Contact electrode |
| 4 | Second dielectric film |
| 41,42,43,44 | Internal base capacitors |
| 5 | contact means |
| 61,62,63 | contact electrode coating profiles |

## Claims

1. Metallized film capacitor with a series connection of internal base capacitors (21,22, 23,24), having a first and a second metallic coating (1,3) applied to two dielectric films (2,4), wherein
the coatings (1,3) comprise a first (11) and a second (13,33) contact electrode and an intermediate electrode (31,32),
the intermediate electrode (31) and a capacitive area of the first contact electrode (11) form a first internal base capacitor (21) of width $W_{cap}$,
the first contact electrode (11) and the intermediate electrode (31) each have an effective surface resistivity $\rho_{cap}(c)$, $\rho_{cap}(i)$ obtained by averaging a respective local surface resistivity $\rho(c,x)$, $\rho(i,x)$ over the capacitive area of width $W_{cap}$,
**characterized in that** $\rho_{cap}(c) < \rho_{cap}(i)$ and **in that** the local surface resistivity $\rho(c,x=W)$ of the first contact electrode (11) at a free edge of the first contact electrode (11) is higher than $\rho_{cap}(c)$.

2. Metallized film capacitor according to claim 1, **characterized in that** the minimum $\rho_{min}(i)$ of the local surface resistivity $\rho(i,x)$ of the intermediate electrode (31) is higher than the effective surface resistivity $\rho_{cap}(c)$ of the contact electrode (11).

3. Metallized film capacitor according to claim 1 or 2, wherein the contact electrodes (11,13) are contacted by a contact means (5) via a lateral side face of the capacitor, **characterized in that** only a fraction of the side face is covered by the contact means (5).

4. Metallized film capacitor according to one of claims 1 to 3, **characterized in that** the capacitive areas of the contact electrodes (11,13) are not or only partly segmented.

5. Metallized film capacitor according to one of claims 1 to 3, **characterized in that** the local surface resistivity $\rho(c,x)$ of the contact electrode (11,13) changes steplike from a low to a high value.

6. Metallized film capacitor according to one of claims 1 to 3, **characterized in that** the intermediate electrode (31) has a constant thickness and is self-healing and/or segmented longitudinally.

7. Metallized film capacitor according to one of claims 1 to 3, **characterized in that** it comprises one intermediate electrode (32) and the internal series connection comprises two base capacitors (21,22).

8. Metallized film capacitor according to one of claims 1 to 4, **characterized in that** it comprises three to eight base capacitors (21,22,23,24).

9. Metallized film capacitor according to one of claims 1 to 3, **characterized in that** the effective surface resistivity $\rho_{cap}(c) < 7 \ \Omega/\square$.

10. Metallized film capacitor according to one of claims 1 to 3, **characterized in that** the first contact electrode (11) and the intermediate electrodes (31) have complementary metallization thicknesses.

**Fig. 1**

**Fig. 2**

**Fig. 3**

**Fig. 4**

**Fig. 5**

**European Patent Office**

## EUROPEAN SEARCH REPORT

Application Number

EP 02 40 5543

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 276 765 A (VARMA DILIPKUMAR) 5 October 1994 (1994-10-05) * figures 3,5-9 * | 1-4,6-8, 10 | H01G4/012 |
| Y | | 5,9 | |
| X | EP 0 789 371 A (ICAR SPA) 13 August 1997 (1997-08-13) * figure 7 * * abstract * | 1-4,7,9, 10 | |
| Y | US 5 614 111 A (LAVENE BERNARD) 25 March 1997 (1997-03-25) * figures 3A,6 * * column 5, line 50 - line 61 * | 5,9 | |

| | |
|---|---|
| | TECHNICAL FIELDS SEARCHED (Int.Cl.7) |
| | H01G |

The present search report has been drawn up for all claims

| Place of search | Date of completion of the search | Examiner |
|---|---|---|
| THE HAGUE | 12 December 2002 | Goossens, A |

EPO FORM 1503 03.82 (P04C01)

**ANNEX TO THE EUROPEAN SEARCH REPORT
ON EUROPEAN PATENT APPLICATION NO.**

EP 02 40 5543

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2002

| Patent document cited in search report | | Publication date | Patent family member(s) | | Publication date |
|---|---|---|---|---|---|
| GB 2276765 | A | 05-10-1994 | NONE | | |
| EP 0789371 | A | 13-08-1997 | IT | MI960248 A1 | 11-08-1997 |
| | | | DE | 69623588 D1 | 17-10-2002 |
| | | | EP | 0789371 A1 | 13-08-1997 |
| | | | US | 5757607 A | 26-05-1998 |
| US 5614111 | A | 25-03-1997 | US | 5608600 A | 04-03-1997 |
| | | | US | 5610796 A | 11-03-1997 |
| | | | US | 6111743 A | 29-08-2000 |
| | | | WO | 9419813 A1 | 01-09-1994 |

EPO FORM P0459

For more details about this annex : see Official Journal of the European Patent Office, No. 12/82